# EUROPEAN PATENT APPLICATION

(11) **EP 4 254 395 A2**
(43) Date of publication of application: **04.10.2023**
(21) Application number: 23191627.1
(22) Date of filing: 28.03.2018
(51) Int. Cl.: G09G 3/36

(54) **DISPLAY SUBSTRATE, DISPLAY PANEL, AND DISPLAY DEVICE**

(30) Priority: 28.08.2017 CN 201710751655
(62) Divisional of application: 18851831.0
(71) Applicant: BOE Technology Group Co., Ltd., Beijing 100015 (CN)
(72) Inventor: Long, Chunping, Beijing, 100176 (CN); Xu, Jian, Beijing, 100176 (CN); Li, Hui, Beijing, 100176 (CN); Ma, Yongda, Beijing, 100176 (CN)
(74) Representative: Cohausz & Florack

(57) **Abstract**

A display substrate comprises a plurality of pixel units, data lines (10) located between any two adjacent columns of pixel units, and a group of gate lines (20) corresponding to each row of pixel units. Each pixel unit comprises a first subpixel region (30) and a second subpixel region (40). Each pixel unit comprises slit electrodes and two thin film transistors (50) respectively corresponding to the first subpixel region (30) and the second subpixel region (40). The slit electrodes comprise a first slit electrode (60) and a second slit electrode (70) respectively corresponding to the first subpixel region (30) and the second subpixel region (40). The slit extension direction of one slit group (80) of the first slit electrode (60) is different from that of at least one slit group (80) of the second slit electrode (70) and directions of electric fields formed by the two slit electrodes are different.

## Description

This application is a divisional application of EP Patent Application No. 18851831.0 filed with the EPO on May 22, 2019, which claims the benefit of Chinese Patent Application No. 201710751655.6, filed with the Chinese Patent Office on August 28, 2017, and entitled "A display substrate, a display panel, and a display device".

### Field

This disclosure relates to the field of display technologies, and particularly to a display substrate, a display panel, and a display device.

### Background

As the sciences and technologies are advancing constantly, a Thin Film Transistor Liquid Crystal Display (TFT-LCD) is evolving gradually into a display with a high contrast, no grayscale inversion, a high brightness, a high saturation, a rapid response, a wide angle of view, etc.

For the TFT-LCD, different arrangement patterns of liquid crystal molecules correspond to different optical anisotropies, where a birefringent index is lower as an angle between incident light and the liquid crystal molecules is smaller, and higher as the angle is larger. There are different angles between light rays incident into a liquid crystal box at different angles, and the liquid crystal molecules in another direction than the normal of a display panel, so there are different valid optical path differences at different angles of view. As a valid optical path difference is varying, there is also a varying proportion of transmittances of monochromatic light in red, green, and blue, so that there may be a color cast while the liquid crystal panel is being viewed at a side angle of view, thus degrading the display effect of the liquid crystal display.

### Summary

At least one embodiment of the disclosure provides a display substrate including: a base substrate, a plurality of pixel units arranged in an array on the base substrate, data lines located between any two adjacent columns of pixel units, and a group of gate lines arranged corresponding to respective rows of pixel units; where each gate line segments a pixel region of each pixel unit in a corresponding row of pixel units into a first sub-pixel region and a second sub-pixel region; each pixel unit includes slit electrodes, and two thin film transistors arranged corresponding respectively to the first sub-pixel region and the second sub-pixel region, where channel width to length ratios of the two thin film transistors are different, and the slit electrodes include a first slit electrode and a second slit electrode corresponding respectively to the first sub-pixel region and the second sub-pixel region; where each of the first slit electrode and the second slit electrode includes at least one slit group, each slit group includes a plurality of slits arranged in a same direction, where an extension direction of each slit in one of the at least one slit group of the first slit electrode is different from an extension direction of each slit in at least one of the at least one slit group of the second slit electrode, and a direction of a corresponding electric field formed by the one of the at least one slit group of the first slit electrode is different from a direction of a corresponding electric field formed by the at least one of the at least one slit group of the second slit electrode.

In some embodiments of the disclosure, the display substrate further includes plate-shaped electrodes arranged spaced from the slit electrodes on sides of the slit electrodes proximate to the base substrate.

In some embodiments of the disclosure, the first slit electrode and the second slit electrode are insulated from each other.

In some embodiments of the disclosure, each slit of the first slit electrode has a same first slit line width, and any two adjacent slits, arranged in the same direction, of the first slit electrode have a same first slit spacing; and/or each slit of the second slit electrode has a same second slit line width, and any two adjacent slits, arranged in the same direction, of the second slit electrode have a same second slit spacing.

In some embodiments of the disclosure, the first slit line width ranges from 2µm to 10µm, the first slit spacing ranges from 2µm to 10µm, the second slit line width ranges from 2µm to 10µm, and the second slit spacing ranges from 2µm to 10µm.

In some embodiments of the disclosure, an area of the first sub-pixel region is not equal to an area of the second sub-pixel region.

In some embodiments of the disclosure, the area of the first sub-pixel region is larger than the area of the second sub-pixel region, the first slit line width is less than the second slit line width, and the first slit spacing is less than the second slit spacing; or the area of the first sub-pixel region is smaller than the area of the second sub-pixel region, the first slit line width is greater than the second slit line width, and the first slit spacing is greater than the second slit spacing.

In some embodiments of the disclosure, when the area of the first sub-pixel region is n times the area of the second sub-pixel region, the first slit line width is no less than 1/n of the second slit line width, and the first slit spacing is no less than 1/n of the second slit line width, where n is a positive number.

In some embodiments of the disclosure, each of the first slit electrode and the second slit electrode includes one slit group, and an angle between an extension direction of each slit in the one slit group of the first slit electrode, and an extension direction of each slit in the one slit group of the second slit electrode ranges from 30° to 150°.

In some embodiments of the disclosure, the angle between the extension direction of each slit in the one slit group of the first slit electrode, and the extension direction of each slit in the one slit group of the second slit electrode is 90°±1°.

In some embodiments of the disclosure, the first slit electrode includes one slit group, the second slit electrode includes two slit groups including slits in different extension directions, and an angle between the extension directions of the slits in the two slit groups of the second slit electrode ranges from 10° to 170°; or the second slit electrode includes one slit group, the first slit electrode includes two slit groups including slits in different extension directions, and an angle between the extension directions of the slits in the two slit groups of the first slit electrode ranges from 10° to 170°.

In some embodiments of the disclosure, when the second slit electrode includes two slit groups including slits in different extension directions, the two slit groups of the second slit electrode are arranged in an extension direction of the data lines, and an angle between an extension direction of each slit in a slit group, in the second slit electrode, arranged proximate to a corresponding gate line, and an extension direction of each slit in the one slit group of the first slit electrode ranges from 30° to 150°; or when the first slit electrode includes two slit groups including slits in different extension directions, the two slit groups of the first slit electrode are arranged in an extension direction of the data lines, and an angle between an extension direction of each slit in a slit group, in the first slit electrode, arranged proximate to a corresponding gate line, and an extension direction of each slit in the one slit group of the second slit electrode ranges from 30° to 150°.

In some embodiments of the disclosure, each of the first slit electrode and the second slit electrode includes two slit groups including slits in different extension directions, an angle between the extension directions of the slits in the two slit groups of the first slit electrode ranges from 10° to 170°, and an angle between the extension directions of the slits in the two slit groups of the second slit electrode ranges from 10° to 170°.

In some embodiments of the disclosure, the two slit groups of the first slit electrode, and the two slit groups of the second slit electrode are arranged in an extension direction of the data lines respectively, and an angle between an extension direction of each slit in a slit group, in the first slit electrode, arranged proximate to a corresponding gate line, and an extension direction of each slit in a slit group, in the second slit electrode, arranged proximate to the corresponding gate line ranges from 30° to 150°.

In some embodiments of the disclosure, each of the first slit electrode and the second slit electrode includes four slit groups arranged in two rows and two columns, a row arrangement direction and a column arrangement direction of the four slit groups of the first slit electrode are parallel to the gate lines and the data lines respectively, and a row arrangement direction and a column arrangement direction of the four slit groups of the second slit electrode are parallel to the gate lines and the data lines respectively; and an angle between extension directions of slits in any two adjacent slit groups in the first slit electrode ranges from 10° to 170°, and an angle between extension directions of slits in any two adjacent slit groups in the second slit electrode ranges from 10° to 170°.

In some embodiments of the disclosure, angles between extension directions of slits in two pairs of slit groups, in the first slit electrode and the second slit electrode, arranged proximate to a corresponding gate line and positioned opposite to each other, range from 30° to 150° respectively.

At least one embodiment of the disclosure provides a display panel including the display substrate according to any one of the technical solutions above.

At least one embodiment of the disclosure provides a display device including the display panel according to any one of the technical solutions above.

### Brief Description of the Drawings

In order to make the technical solutions according to the embodiments of the disclosure more apparent, the drawings to which reference is to be made in the description of the embodiments will be introduced below in brief, and apparently the drawings to be described below illustrate some embodiments of the disclosure, and those ordinarily skilled in the art can further derive other drawings from these drawings without any inventive effort.
Fig. 1 is a structural diagram of a part of a display substrate according to some embodiments of the disclosure in a top view.
Fig. 2 is a structural diagram of a part of a display substrate according to some embodiments of the disclosure in a top view.
Fig. 3 is a structural diagram of a part of a display substrate according to some embodiments of the disclosure in a top view.
Fig. 4 is a structural diagram of a part of a display substrate according to some embodiments of the disclosure in a top view.
Fig. 5 is a structural diagram of a part of a display substrate according to some embodiments of the disclosure in a top view.

### Detailed Description of the Embodiments

In order to make the objects, technical solutions, and advantages of the embodiments of the disclosure more apparent, the technical solutions according to the embodiments of the disclosure will be described below clearly and fully with reference to the drawings in the embodiments of the disclosure, and apparently the embodiments to be described below are only a part but not all of the embodiments of the disclosure. Based upon the embodiments here of the disclosure, all the other embodiments which can occur to those ordinarily skilled in the art without any inventive effort shall fall into the scope of the disclosure.

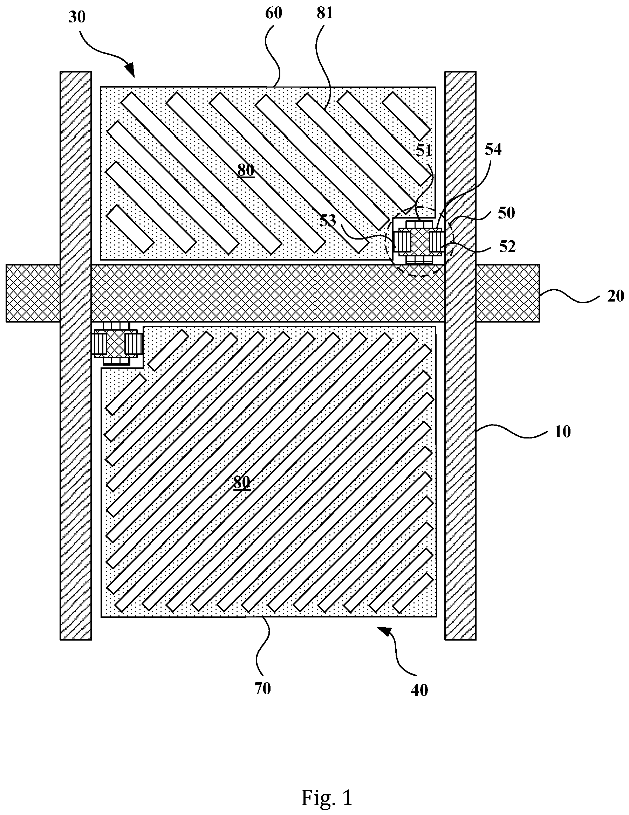

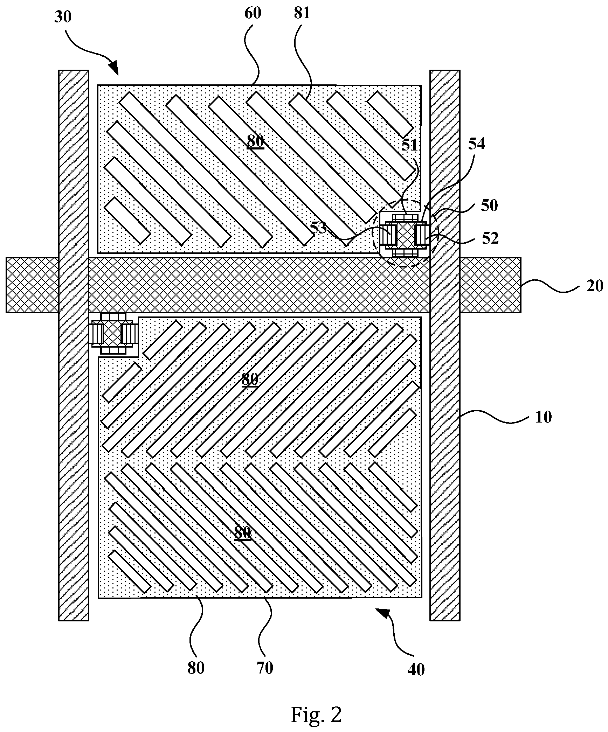

As illustrated in Fig. 1 and Fig. 2, a display substrate according to the embodiments of the disclosure includes: a base substrate, a plurality of pixel units arranged in an array on the base substrate, data lines 10 located between any two adjacent columns of pixel units, and a group of gate lines 20 arranged corresponding to respective rows of pixel units; where each gate line 20 segments a pixel region of each pixel unit in a corresponding row of pixel units into a first sub-pixel region 30 and a second sub-pixel region 40; each pixel unit includes slit electrodes, and two thin film transistors 50 arranged corresponding respectively to the first sub-pixel region 30 and the second sub-pixel region 40, where channel width to length ratios of the two thin film transistors 50 are different, and the slit electrodes include a first slit electrode 60 and a second slit electrode 70 corresponding respectively to the first sub-pixel region 30 and the second sub-pixel region 40.

Where each of the first slit electrode 60 and the second slit electrode 70 includes at least one slit group 80, each slit group 80 includes a plurality of slits 81 extended in a same direction, an extension direction of each slit in one of the at least one slit group 80 of the first slit electrode 60 is different from an extension direction of each slit in at least one of the at least one slit group 80 of the second slit electrode 70, and a direction of a corresponding electric field formed by the one of the at least one slit group of the first slit electrode is different from a direction of a corresponding electric field formed by the at least one of the at least one slit group of the second slit electrode.

In some embodiments of the disclosure, the display substrate further includes plate-shaped electrodes arranged spaced from the slit electrodes on sides of the slit electrodes proximate to the base substrate. As illustrated in Fig. 1 to Fig. 5, in these embodiments, the plate-shaped electrodes are particularly a common electrode (not illustrated), the slit electrodes are particularly pixel electrodes, and the first slit electrode 60 is insulated from the second slit electrode 70. In some other embodiments of the disclosure, the plate-shaped electrodes can be pixel electrodes, and the slit electrodes can be a common electrode. After voltage is applied to the common electrode and the pixel electrodes, an edge electric field is formed between the common electrode and the pixel electrodes so that all the liquid crystal molecules, between the comb-shaped pixel electrodes in the liquid crystal box, right above the electrodes can be deflected in a plane parallel to the base substrate, thus resulting in a higher light transmittance. Since the extension direction of each slit in the one of the at least one slit group of 80 of the first slit electrode 60 is different from the extension direction of each slit in the at least one of the at least one slit group 80 of the second slit electrode 70, directions of corresponding electric fields formed between the slit groups 80 including the slits in the different extension directions, and the plate-shaped electrodes are also different.

Here materials of the gate lines 20 and the data lines 10 will not be limited, and for example, they can include Cu, Al, Mo, Ti, Cr, W, Nd, Nb, etc.; and line widths of the gate lines 20 and the data lines 10 will not be limited, and in some embodiments of the disclosure, a line width of each gate line 20 can range from 2µm to 30µm, and a line width of each data line 10 can range from 2µm to 10µm.

In the technical solutions according to the embodiments of the disclosure, the two thin film transistors 50 control the first sub-pixel region 30 and the second sub-pixel region 40 respectively, where driving voltage of the first sub-pixel region 30 and the second sub-pixel region 40 can be adjusted respectively according to areas of the two sub-pixel regions, so that liquid crystal molecules corresponding to the two sub-pixel regions at a liquid crystal layer can be deflected in different directions to thereby compensate effectively for a color cast arising from only one deflection direction of the liquid crystal molecules; and the first slit electrode 60 and the second slit electrode 70 of each pixel unit include at least one slit group 80 respectively, and the extension direction of each slit in one of the at least one slit group 80 of the first slit electrode 60 is different from the extension direction of each slit in at least one of the at least one slit group 80 of the second slit electrode 70, so that each of the first sub-pixel region 30 and the second sub-pixel region 40 includes at least one domain, and deflection directions of corresponding liquid crystal molecules in respective domains are different, thus the color cast of the display device can be further alleviated, and the display device can be provided with a higher angle of view and a greatly improved display effect accordingly.

As known to those skilled in the art, each thin film transistor 50 includes a gate 51, a gate insulation layer (not illustrated) formed above the gate 51, an active layer 53 formed above the gate insulation layer, and a source 52 and a drain 53 connected respectively with the active layer 54. In the display substrate according to the embodiments of the disclosure, gates 51 of the two thin film transistors 50 of each pixel unit arranged corresponding respectively to the first sub-pixel region 30 and the second sub-pixel region 40 are connected respectively with a gate line 20 corresponding to the pixel unit, sources 52 of the two thin film transistors 50 are connected respectively with two data lines located on two sides of the pixel unit, and drains 53 of the two thin film transistors 50 are connected respectively with the first slit electrode 60 and the second slit electrode 70.

For the first slit electrode 60, slit line widths of respective slits 81 may or may not be the same, and the spacing between any two adjacent slits 81 arranged in the same direction may or may not be the same; and the same will apply to the second slit electrode 70. In an optional embodiment of the disclosure, each slit 81 of the first slit electrode 60 has the same slit line width, and any two adjacent slits 81 arranged in the same direction of the first slit electrode 60 have the same first slit spacing; and each slit 81 of the second slit electrode 70 may also have the same slit line width, and any two adjacent slits 81 arranged in the same direction of the second slit electrode 70 may also have the same second slit spacing. In this way, liquid crystal molecules in the same domain have substantially the same deflection direction, and are arranged uniformly and regularly in order.

Here values of the first slit line width, the first slit spacing, the second slit line width, and the second slit spacing will not be limited, and in some embodiments of the disclosure, all of the first slit line width, the first slit spacing, the second slit line width, and the second slit spacing can range from 2µm to 10µm.

In an optional embodiment of the disclosure, an area of the first sub-pixel region 30 is not equal to an area of the second sub-pixel region 40, so that it is convenient for the two thin film transistors 50 to provide different driving voltage according to the different areas of the first sub-pixel region 30 and the second sub-pixel region 40 respectively, therefore deflection directions of liquid crystal molecules corresponding to the two sub-pixel regions at the liquid crystal layer will be different to thereby further alleviate the color cast of the display device. In this case, design parameters of the two thin film transistors 50 can be changed to provide the two thin film transistors 50 with different channel width to length ratios so as to provide the first sub-pixel region 30 and the second sub-pixel region 40 with different voltage as needed. Moreover, the first sub-pixel region and the second sub-pixel region are provided with different driving voltage by their corresponding thin film transistors according to their different areas so that there is a better display effect of the sub-pixel region with the smaller area, at a low grayscale.

In some embodiments of the disclosure, the area of the first sub-pixel region is larger than the area of the second sub-pixel region, the first slit line width is less than the second slit line width, and the first slit spacing is less than the second slit spacing. In another embodiment of the disclosure, the area of the first sub-pixel region is smaller than the area of the second sub-pixel region, the first slit line width is greater than the second slit line width, and the first slit spacing is greater than the second slit spacing. Stated otherwise, the slit line width and the slit spacing of a slit electrode corresponding to a sub-pixel region with the smaller area are larger than the slit line width and the slit spacing of a slit electrode corresponding to a sub-pixel region with the larger area respectively, so that for the sub-pixel region with the smaller area, the larger slit line width and the larger slit spacing increase an area of the slit electrode to emit lines of electric forces, i.e., enhance a valid area of the slit electrode, so that the light transmittance of the sub-pixel region with the smaller area can be improved effectively, which will enable the two sub-pixel regions with different areas to receive approximate intensities of light to thereby further alleviate the color cast of the display device, and facilitate a uniform angle of view of the display device. Also as per the electro-optical characteristic curve, the voltage difference between adjacent grayscales in a low-grayscale area is less than the voltage difference between adjacent grayscales in a high-grayscale area, so the valid area of the slit electrode in the sub-pixel region with the smaller area can be increased to thereby improve the valid light transmittance thereof so as to improve the resolution of the display device displaying at a low grayscale.

Optionally, when the area of the first sub-pixel region is n times the area of the second sub-pixel region, the first slit line width is no less than 1/n of the second slit line width, and the first slit spacing is no less than 1/n of the second slit spacing, where n is a positive integer. With the solution according to this embodiment, the first sub-pixel region and the second sub-pixel region can receive approximate intensities of light while improving effectively the light transmittance of the sub-pixel with the smaller area, thus further improving the color cast of the display device.

As illustrated in Fig. 1, each of the first slit electrode 60 and the second slit electrode 70 includes one slit group 80, and an angle between an extension direction of each slit in the one slit group 80 of the first slit electrode 60, and an extension direction of each slit in the one slit group 80 of the second slit electrode 70 ranges from 30° to 150°. In this case, each pixel unit includes two domains. In an optional embodiment of the disclosure, the angle between the extension direction of each slit in the one slit group 80 of the first slit electrode 60, and the extension direction of each slit in the one slit group 80 of the second slit electrode 70 is 90°±1°.

As illustrated in Fig. 2, in this optional embodiment, the first slit electrode 60 includes one slit group 80, the second slit electrode 70 includes two slit groups 80 with different slit extension directions, and an angle between extension directions of slits in the two slit groups 80 of the second slit electrode 70 ranges from 10° to 170°; and in order to further alleviate the color cast of the display device, the two slit groups 80 of the second slit electrode 70 are arranged in an extension direction of the data lines 10, and an angle between an extension direction of each slit in a slit group 80, in the second slit electrode 70, arranged proximate to a corresponding gate line 20, and an extension direction of each slit in the one slit group 80 of the first slit electrode 60 ranges from 30° to 150°.

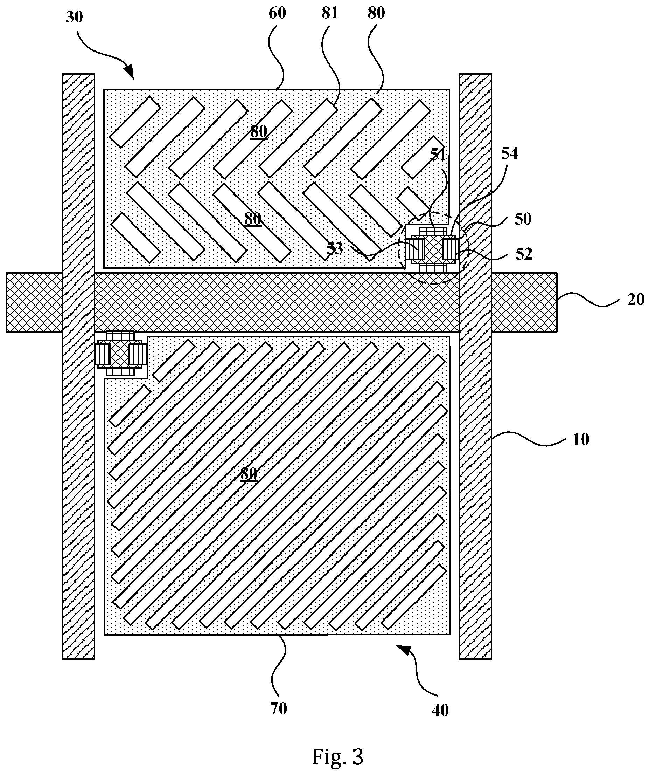

As illustrated in Fig. 3, in this optional embodiment, the second slit electrode 70 includes one slit group 80, the first slit electrode 60 includes two slit groups 80 with different extension directions of slits, and an angle between extension directions of slits in the two slit groups 80 of the first slit electrode 60 ranges from 10° to 170°; and in order to further alleviate the color cast of the display device, the two slit groups 80 of the first slit electrode 60 are arranged in an extension direction of the data lines 10, and an angle between an extension direction of each slit in a slit group 80, in the first slit electrode 60, arranged proximate to a corresponding gate line 20, and an extension direction of each slit in the one slit group 80 of the second slit electrode 70 ranges from 30° to 150°.

In the two embodiments as illustrated in Fig. 2 and Fig. 3, one sub-pixel region includes two domains, and the other sub-pixel region includes one domain, that is, each pixel unit includes three domains, thus resulting in a larger angle of view of the display device.

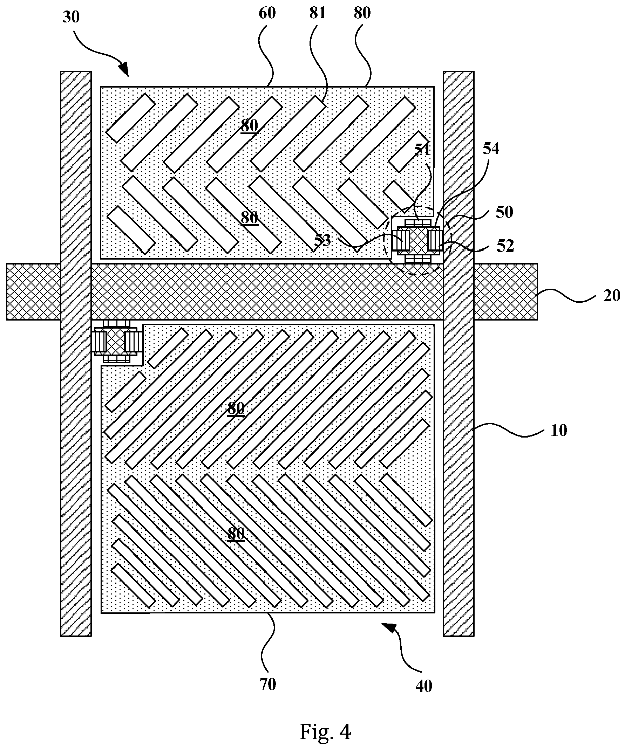

As illustrated in Fig. 4, in this optional embodiment, each of the first slit electrode 60 and the second slit electrode 70 includes two slit groups 80 with different slit extension directions, an angle between extension directions of slits in the two slit groups 80 of the first slit electrode 60 ranges from 10° to 170°, and an angle between extension directions of slits in the two slit groups 80 of the second slit electrode 70 ranges from 10° to 170°; and in order to further alleviate the color cast of the display device, the two slit groups 80 of the first slit electrode 60, and the two slit groups 80 of the second slit electrode 70 are arranged in the extension direction of the data lines 10 respectively, and an angle between an extension direction of each slit in a slit group 80, in the first slit electrode 60, arranged proximate to a corresponding gate line 20, and an extension direction of each slit in a slit group 80, in the second slit electrode 70, arranged proximate to the corresponding gate line 20 ranges from 30° to 150°, so that each pixel unit includes four domains, thus resulting in a larger angle of view of the display device.

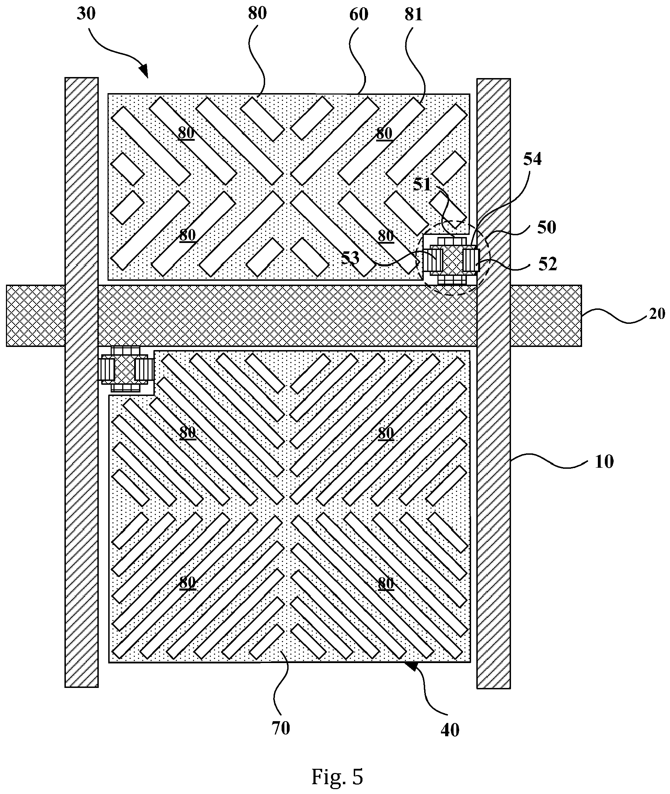

As illustrated in Fig. 5, each of the first slit electrode 60 and the second slit electrode 70 includes four slit groups 80 arranged in two rows and two columns, a row arrangement direction of the four slit groups 80 of the first slit electrode 60 is parallel to the gate lines 20, a column arrangement direction of the four slit groups 80 of the first slit electrode 60 is parallel to the data lines 10, a row arrangement direction of the four slit groups 80 of the second slit electrode 70 is parallel to the gate lines 20, and a column arrangement direction of the four slit groups 80 of the second slit electrode 70 is parallel to the data lines 10; and furthermore, an angle between extension directions of slits in any two adjacent slit groups 80 in the first slit electrode ranges from 10° to 170°, and an angle between extension directions of slits in any two adjacent slit groups 80 in the second slit electrode ranges from 10° to 170°. In order to further alleviate the color cast of the display device, angles between extension directions of slits in two pairs of slit groups 80, in the first slit electrode 60 and the second slit electrode 70, arranged proximate to a corresponding gate line 20, and positioned opposite to each other range from 30° to 150° respectively, so that each pixel unit includes eight domains, thus resulting in a larger angle of view of the display device.

It shall be noted that, the angles between the extension directions of the slits in the respective slit groups as listed above are only preferable optional values, but an actual design of the pixel structure will not be limited to the particular values above.

The embodiments of the disclosure further provide a display panel including the display substrate according to any one of the technical solutions above. A color cast of a display device to which the display panel is applied can be alleviated to thereby improve the display effect of the display device.

The embodiments of the disclosure further provide a display device including the display panel according to the technical solution above. A color cast of the display device can be alleviated to thereby greatly improve the display effect of the display device. Where the types of the display device are not limited, and can be a flat panel display, a tablet computer, a mobile phone, or a vehicle-mounted display, etc.

Lastly it shall be noted that the foregoing embodiments are merely intended to illustrate but not to limit the technical solutions of the disclosure; and although the disclosure has been described in details with reference to the foregoing embodiments, those ordinarily skilled in the art shall appreciate that the technical solutions recited in the foregoing respective embodiments can be modified or equivalent substitutions can be made to a part of the technical features thereof; and the essence of the corresponding technical solutions will not depart from the scope of the technical solutions according to the respective embodiments of the disclosure due to these modifications or substitutions.

The following embodiments shall also be disclosed:
1. A display substrate, comprising:
   a base substrate;
   a plurality of pixel units arranged in an array on the base substrate;
   data lines located between any two adjacent columns of pixel units; and
   a group of gate lines arranged corresponding to respective rows of pixel units;
   wherein each gate line segments a pixel region of each pixel unit in a corresponding row of pixel units into a first sub-pixel region and a second sub-pixel region; each pixel unit comprises slit electrodes, and two thin film transistors arranged corresponding respectively to the first sub-pixel region and the second sub-pixel region; wherein channel width to length ratios of the two thin film transistors are different, and the slit electrodes comprise a first slit electrode and a second slit electrode corresponding respectively to the first sub-pixel region and the second sub-pixel region, wherein:
   each of the first slit electrode and the second slit electrode comprises at least one slit group, each slit group comprises a plurality of slits arranged in a same direction, an extension direction of each slit in one of the at least one slit group of the first slit electrode is different from an extension direction of each slit in at least one of the at least one slit group of the second slit electrode, and a direction of a corresponding electric field formed by the one of the at least one slit group of the first slit electrode is different from a direction of a corresponding electric field formed by the at least one of the at least one slit group of the second slit electrode.
2. The display substrate according to embodiment 1, wherein the display substrate further comprises plate-shaped electrodes arranged spaced from the slit electrodes on sides of the slit electrodes proximate to the base substrate.
3. The display substrate according to embodiment 1, wherein the first slit electrode and the second slit electrode are insulated from each other.
4. The display substrate according to embodiment 1, wherein each slit of the first slit electrode has a same first slit line width, and any two adjacent slits, arranged in the same direction, of the first slit electrode have a same first slit spacing; and/or
   each slit of the second slit electrode has a same second slit line width, and any two adjacent slits, arranged in the same direction, of the second slit electrode have a same second slit spacing.
5. The display substrate according to embodiment 4, wherein the first slit line width ranges from 2µm to 10µm, the first slit spacing ranges from 2µm to 10µm, the second slit line width ranges from 2µm to 10µm, and the second slit spacing ranges from 2µm to 10µm.
6. The display substrate according to embodiment 1, wherein an area of the first sub-pixel region is not equal to an area of the second sub-pixel region.
7. The display substrate according to embodiment 4, wherein an area of the first sub-pixel region is larger than an area of the second sub-pixel region, the first slit line width is less than the second slit line width, and the first slit spacing is less than the second slit spacing; or an area of the first sub-pixel region is smaller than an area of the second sub-pixel region, the first slit line width is greater than the second slit line width, and the first slit spacing is greater than the second slit spacing.
8. The display substrate according to embodiment 7, wherein when the area of the first sub-pixel region is n times the area of the second sub-pixel region, the first slit line width is no less than 1/n of the second slit line width, and the first slit spacing is no less than 1/n of the second slit line width, wherein n is a positive number.
9. The display substrate according to embodiment 1, wherein each of the first slit electrode and the second slit electrode comprises one slit group, and an angle between an extension direction of each slit in the one slit group of the first slit electrode, and an extension direction of each slit in the one slit group of the second slit electrode ranges from 30° to 150°.
10. The display substrate according to embodiment 9, wherein the angle between the extension direction of each slit in the one slit group of the first slit electrode, and the extension direction of each slit in the one slit group of the second slit electrode is 90°±1°.
11. The display substrate according to embodiment 1, wherein the first slit electrode comprises one slit group, the second slit electrode comprises two slit groups comprising slits in different extension directions, and an angle between the extension directions of the slits in the two slit groups of the second slit electrode ranges from 10° to 170°; or
   the second slit electrode comprises one slit group, the first slit electrode comprises two slit groups comprising slits in different extension directions, and an angle between the extension directions of the slits in the two slit groups of the first slit electrode ranges from 10° to 170°.
12. The display substrate according to embodiment 11, wherein when the second slit electrode comprises two slit groups comprising slits in different extension directions, the two slit groups of the second slit electrode are arranged in an extension direction of the data lines, and an angle between an extension direction of each slit in a slit group, in the second slit electrode, arranged proximate to a corresponding gate line, and an extension direction of each slit in the one slit group of the first slit electrode ranges from 30° to 150°; or
   when the first slit electrode comprises two slit groups comprising slits in different extension directions, the two slit groups of the second slit electrode are arranged in an extension direction of the data lines, and an angle between an extension direction of each slit in a slit group, in the first slit electrode, arranged proximate to a corresponding gate line, and an extension direction of each slit in the one slit group of the second slit electrode ranges from 30° to 150°.
13. The display substrate according to embodiment 1, wherein each of the first slit electrode and the second slit electrode comprises two slit groups comprising slits in different extension directions, an angle between the extension directions of the slits in the two slit groups of the first slit electrode ranges from 10° to 170°, and an angle between the extension directions of the slits in the two slit groups of the second slit electrode ranges from 10° to 170°.
14. The display substrate according to embodiment 13, wherein the two slit groups of the first slit electrode, and the two slit groups of the second slit electrode are arranged in an extension direction of the data lines respectively, and an angle between an extension direction of each slit in a slit group, in the first slit electrode, arranged proximate to a corresponding gate line, and an extension direction of each slit in a slit group, in the second slit electrode, arranged proximate to the corresponding gate line ranges from 30° to 150°.
15. The display substrate according to embodiment 1, wherein each of the first slit electrode and the second slit electrode comprises four slit groups arranged in two rows and two columns, a row arrangement direction and a column arrangement direction of the four slit groups of the first slit electrode are parallel to the gate lines and the data lines respectively, and a row arrangement direction and a column arrangement direction of the four slit groups of the second slit electrode are parallel to the gate lines and the data lines respectively; and an angle between extension directions of slits in any two adjacent slit groups in the first slit electrode ranges from 10° to 170°, and an angle between extension directions of slits in any two adjacent slit groups in the second slit electrode ranges from 10° to 170°.
16. The display substrate according to embodiment 15, wherein angles between extension directions of slits in two pairs of slit groups, in the first slit electrode and the second slit electrode, arranged proximate to a corresponding gate line, and positioned opposite to each other range from 30° to 150° respectively.
17. A display panel, comprising the display substrate according to any one of embodiments 1 to 16.
18. A display device, comprising the display panel according to embodiment 17.

## Claims

1. A display substrate for liquid crystal display, comprising:
a base substrate;
a plurality of pixel units arranged in an array on the base substrate;
data lines (10) located between any two adjacent columns of pixel units;
a group of gate lines (20) arranged corresponding to respective rows of pixel units;
wherein each gate line (20) segments a pixel region of each pixel unit in a corresponding row of pixel units into a first sub-pixel region (30) and a second sub-pixel region (40); each pixel unit comprises slit electrodes (60, 70), and two thin film transistors (50) arranged corresponding respectively to the first sub-pixel region (30) and the second sub-pixel region (40); wherein the slit electrodes (60, 70) comprise a first slit electrode (60) and a second slit electrode (70) corresponding respectively to the first sub-pixel region (30) and the second sub-pixel region (40); and
common electrodes located between a layer where the slit electrodes (60, 70) are located and the base substrate;
wherein each of the first slit electrode (60) and the second slit electrode (70) comprises at least one slit group (80), each slit group (80) comprises a plurality of slits (81) arranged in a same direction, an extension direction of each slit (81) in one of the at least one slit group (80) of the first slit electrode (60) is different from an extension direction of each slit (81) in at least one of the at least one slit group (80) of the second slit electrode (70), and a direction of an electric field formed between the one of the at least one slit group (80) of the first slit electrode (60) and a corresponding common electrode is different from a direction of an electric field formed between the at least one of the at least one slit group (80) of the second slit electrode (70) and a corresponding common electrode.

2. The display substrate according to claim 1, wherein the common electrode are plate-shaped electrodes arranged spaced from the slit electrodes (60, 70), and the plate-shaped electrodes are arranged on a side of the slit electrodes (60, 70) proximate to the base substrate.

3. The display substrate according to claim 1, wherein each slit (81) of the first slit electrode (60) has a same first slit line width, and any two adjacent slits (81), arranged in the same direction, of the first slit electrode (60) have a same first slit spacing; and/or
each slit (81) of the second slit electrode (70) has a same second slit line width, and any two adjacent slits (81), arranged in the same direction, of the second slit electrode (70) have a same second slit spacing.

4. The display substrate according to claim 1, wherein an area of the first sub-pixel region (30) is not equal to an area of the second sub-pixel region (40).

5. The display substrate according to claim 3, wherein an area of the first sub-pixel region (30) is larger than an area of the second sub-pixel region (40), the first slit line width is less than the second slit line width, and the first slit spacing is less than the second slit spacing; or
an area of the first sub-pixel region (30) is smaller than an area of the second sub-pixel region (40), the first slit line width is greater than the second slit line width, and the first slit spacing is greater than the second slit spacing.

6. The display substrate according to claim 5, wherein when the area of the first sub-pixel region (30) is n times the area of the second sub-pixel region (40), the first slit line width is no less than 1/n of the second slit line width, and the first slit spacing is no less than 1/n of the second slit line width, wherein n is a positive number.

7. The display substrate according to claim 1, wherein each of the first slit electrode (60) and the second slit electrode (70) comprises one slit group (80), and an angle between an extension direction of each slit (81) in the one slit group (80) of the first slit electrode (60), and an extension direction of each slit (81) in the one slit group (80) of the second slit electrode (70) ranges from 30° to 150°.

8. The display substrate according to claim 1, wherein the first slit electrode (60) comprises one slit group (80), the second slit electrode (70) comprises two slit groups (80) comprising slits (81) in different extension directions, and an angle between the extension directions of the slits (81) in the two slit groups (80) of the second slit electrode (70) ranges from 10° to 170°; or
the second slit electrode (70) comprises one slit group (80), the first slit electrode (60) comprises two slit groups (80) comprising slits (81) in different extension directions, and an angle between the extension directions of the slits (81) in the two slit groups (80) of the first slit electrode (60) ranges from 10° to 170°.

9. The display substrate according to claim 8, wherein when the second slit electrode (70) comprises two slit groups (80) comprising slits (81) in different extension directions, the two slit groups (80) of the second slit electrode (70) are arranged in an extension direction of the data lines (10), and an angle between an extension direction of each slit (81) in a slit group (80), in the second slit electrode (70), arranged proximate to a corresponding gate line (20), and an extension direction of each slit (81) in the one slit group (80) of the first slit electrode (60) ranges from 30° to 150°; or
when the first slit electrode (60) comprises two slit groups (80) comprising slits (81) in different extension directions, the two slit groups (80) of the second slit electrode (70) are arranged in an extension direction of the data lines (10), and an angle between an extension direction of each slit (81) in a slit group (80), in the first slit electrode (60), arranged proximate to a corresponding gate line (20), and an extension direction of each slit (81) in the one slit group (80) of the second slit electrode (70) ranges from 30° to 150°.

10. The display substrate according to claim 1, wherein each of the first slit electrode (60) and the second slit electrode (70) comprises two slit groups (80) comprising slits (81) in different extension directions, an angle between the extension directions of the slits (81) in the two slit groups (80) of the first slit electrode (60) ranges from 10° to 170°, and an angle between the extension directions of the slits (81) in the two slit groups (80) of the second slit electrode (70) ranges from 10° to 170°.

11. The display substrate according to claim 10, wherein the two slit groups (80) of the first slit electrode (60), and the two slit groups (80) of the second slit electrode (70) are arranged in an extension direction of the data lines (10) respectively, and an angle between an extension direction of each slit (81) in a slit group (80), in the first slit electrode (60), arranged proximate to a corresponding gate line (20), and an extension direction of each slit (81) in a slit group (80), in the second slit electrode (70), arranged proximate to the corresponding gate line (20) ranges from 30° to 150°.

12. The display substrate according to claim 1, wherein each of the first slit electrode (60) and the second slit electrode (70) comprises four slit groups (80) arranged in two rows and two columns, a row arrangement direction and a column arrangement direction of the four slit groups (80) of the first slit electrode (60) are parallel to the gate lines (20) and the data lines (10) respectively, and a row arrangement direction and a column arrangement direction of the four slit groups (80) of the second slit electrode (70) are parallel to the gate lines (20) and the data lines (10) respectively; and an angle between extension directions of slits (81) in any two adjacent slit groups (80) in the first slit electrode (60) ranges from 10° to 170°, and an angle between extension directions of slits (81) in any two adjacent slit groups (80) in the second slit electrode (70) ranges from 10° to 170°.

13. The display substrate according to claim 12, wherein angles between extension directions of slits (81) in two pairs of slit groups (80), in the first slit electrode (60) and the second slit electrode (70), arranged proximate to a corresponding gate line (20), and positioned opposite to each other range from 30° to 150° respectively.

14. A display panel, comprising the display substrate according to any one of claims 1 to 13.

15. A display device, comprising the display panel according to claim 14.
